# EUROPEAN PATENT SPECIFICATION

(11) **EP 1 959 236 B1**
(45) Date of publication and mention of the grant of the patent: **06.10.2010**
(21) Application number: 08151322.8
(22) Date of filing: 12.02.2008
(51) Int. Cl.: G01C 21/34, G05D 1/02

(54) **Lane determining device and lane determining method**
Spurbestimmungsvorrichtung und Spurbestimmungsverfahren
Dispositif et procédé pour déterminer une voie

(30) Priority: 13.02.2007 JP 2007032352
(43) Date of publication of application: 20.08.2008
(73) Proprietor: Aisin AW Co., Ltd., Fujii-cho Anjo-shi, Aichi 444-1192 (JP)
(72) Inventor: Nakao, Koichi, Okazaki-shi Aichi 444-8564 (JP); Nakamura, Masaki, Okazaki-shi Aichi 444-8564 (JP); Nakamura, Motohiro, Toyota-shi Aichi 471-8571 (JP)
(74) Representative: TBK-Patent

(56) References cited:
- EP-A- 1 605 404
- EP-A- 1 674 827
- JP-A- 2000 105 898
- US-A1- 2001 056 326

## Description

The present invention relates to a lane determining device recognizing a vehicle lane on which a vehicle the device is traveling, by using image information including a captured image of at least a lane marking around the vehicle, and relates to a lane determining method thereof.

As an art to recognize the position of a vehicle by using a camera mounted on the vehicle, an art relating to an on-vehicle navigation apparatus as follows is disclosed in, for example, Japanese Patent Application Publication No. JP-A2000-105898 (pages 21-22, FIGs. 24, 25). This apparatus is mounted in a vehicle and includes a camera capturing an image of a surface of a forward area of a road where the vehicle is traveling. The apparatus detects changes in width of lane markings (white lines) marked on the road surface whose image is captured by the camera, and determines that the vehicle is traveling on a right branch when the width of the white line on the left of the vehicle increases, while determining that the vehicle is traveling on a left branch when the width of the right white line increases. In this manner, the apparatus is capable of determining in which branch direction the vehicle is traveling after passing through a branch point (branch determination). Further, when the branch determination has a specific cycle, the apparatus determines whether each of the white lines on the right and left of the vehicle is a dashed line or a solid line, thereby capable of determining on which lane the vehicle is traveling (travel lane determination). The apparatus is further capable of determining whether or not the vehicle has changed lanes, according to a certain distance movement of the white lines in the right or left direction relative to the vehicle (lane change determination).

In short, this apparatus is an art to detect travel information of a vehicle the apparatus, by performing the aforesaid branch determination, travel lane determination, and lane change determination based on the image recognition of lane markings (solid or dashed white lines) marked on a road surface of a lane where the vehicle is traveling. Based on the travel information obtained by these determinations, the position of the vehicle can be accurately specified even when the vehicle has passed through a branch point or the like, and based on the specified position of the vehicle, the vehicle can be properly controlled.
Furthermore, the document US 2001/056326 A1 discloses a navigation apparatus comprising a camera for taking images of a road on which the vehicle is traveling, means for detecting and monitoring lane markers on the road by processing the images, and road determining means for determining the road on which the vehicle is traveling just after passing a fork. This road determination is made based on predetermined conditions relating to the fork and the lane markers detected and monitored. According to the structure described above, it is possible for the navigation apparatus to know the road on which the vehicle is traveling immediately after passing the fork. Further, when the vehicle's actual location is displayed at a wrong position on the digital road map, the navigation apparatus can correct the position immediately after passing the fork.

In order to obtain the accurate position of a vehicle by a navigation apparatus, it is generally beneficial if a road or a lane where the vehicle is traveling can be recognized immediately even after the vehicle passes through a branch point. However, if the branch point is a narrow-angle branch point and thus an angle made by a lane where the vehicle is traveling after passing through the branch point and another road or lane is small, a travel state at this time is not greatly different from a travel state which would be recognized if the vehicle should travel on the other road or lane. Because of this, there sometimes arose a problem that only with information from a conventional GPS (Global Positioning System), gyro sensor, G sensor, and vehicle speed sensor, it is difficult to immediately recognize on which of the branch roads the vehicle is traveling after passing through the branch point. Further, the aforesaid art in Japanese Patent Application Publication No. JP-A2000-105898 detects the travel information of the vehicle by obtaining the information regarding the lane markings marked on the road surface of the lane where the vehicle is traveling, and therefore, if, for example, there is no lane marking before the position where the narrow-angle branch point exists, the travel information of the vehicle cannot be detected, which poses a problem that it is difficult to recognize the position of the vehicle immediately after the vehicle passes through the narrow-angle branch point.

The present invention was made in view of the above problems, and it is an object of the present invention to provide a lane determining device which determines on which lane a vehicle the device is traveling, by using the results of image recognition of lane markings, in particular, which is capable of quickly determining on which lane the vehicle is traveling after passing through a branch point of a road even if no lane marking as a basis of the recognition of the lane exists before the branch point, and to provide a lane determining method thereof.

In order to attain the above object, a lane determining device according to the present invention is characterized in that it includes: an image information obtaining unit obtaining image information including a captured image of at least a lane marking around a vehicle equipped with the lane determining device; a vehicle position information obtaining unit obtaining vehicle position information indicating a current position of the vehicle; a road information obtaining unit obtaining road information including information on a position and a form of the lane marking existing around the vehicle, based on the vehicle position information; an image recognizing unit recognizing the image of the lane marking included in the image information; and a lane determining unit determining a vehicle lane on which the vehicle is traveling, based on a result of the image recognition by the image recognizing unit and the road information. When it is detected, based on the road information, that a branch point exists on a road in a forward direction of the vehicle and the lane marking is not imaged at all or is partly not imaged in the image information, the lane determining unit performs imaging order-based lane determination to determine the vehicle lane, based on an imaging order of specific lane markings imaged after the detection, forms of the specific lane markings, positions of the specific lane markings in the image information, and the road information.
In the present application "specific lane marking" refers to a lane marking of a specific type which is a target of the image recognition in the imaging order-based determination. For example, lane markings having a characteristic shape such as a lane marking with a zebra zone, a lane marking with a deceleration zone, and the like are preferably the specific lane marking. Further, in the present application "branch point" refers to a point where two roads or more meet so that the vehicle can advance in at least two directions, and includes a narrow-angle branch point, an intersection, and the like.

According to this characteristic structure, even when it is detected that a branch point of the road exists in the forward direction of the vehicle equipped with the device and the lane markings are not imaged at all or are partly not imaged in the image information, it is possible to quickly determine a vehicle lane on which the vehicle is traveling after passing through the branch point, based on the imaging order of the specific lane markings imaged after the detection, the forms of the specific lane markings, the positions of the specific lane markings in the image information, and the road information. Specifically, when the lane markings are not imaged at all or are partly not imaged in the image information, it is not possible to specify the vehicle lane. Therefore, if the vehicle passes through the branch point of the road in this state, it is difficult to determine in which direction the vehicle is traveling from the branch point. However, according to this characteristic structure, the imaging order, the forms, and the positions in the image information of the specific lane markings imaged thereafter are collated with the road information, which makes it possible to quickly specify the vehicle lane and to determine in which direction the vehicle is traveling from the branch point.

Here, preferably, the branch point is a narrow-angle branch point of the road.

With this structure, it is possible to quickly determine the vehicle lane on which the vehicle is traveling, even after the vehicle passes through the narrow-angle branch point where conventional independent navigation using a gyro sensor and the like has difficulty in determining in which direction the vehicle is traveling from the branch point.

Preferably, the lane determining unit specifies each of the positions of the specific lane markings in the image information as a right side or a left side of the vehicle.

Generally, the lane marking should be positioned either on the right or on the left of the vehicle, and therefore, by thus determining the position of each of the specific lane markings as the right side or the left side of the vehicle, it is possible to reduce erroneous recognition of the specific lane markings, which enables enhanced accuracy of the imaging order-based lane determination.

Preferably, the imaging order-based lane determination uses, as the specific lane markings, at least one of a lane marking with a zebra zone and a lane marking with a deceleration zone.

With this structure, the specific lane markings with the zebra zones and the specific lane markings with the deceleration zones whose image recognition is relatively easy owing to their characteristic shapes are used as the specific lane markings in the image recognition. Therefore, accuracy in the imaging order-based lane determination can be enhanced. This is especially effective since the aforesaid lane markings with the zebra zones and lane markings with the deceleration zones are often provided as lane markings near a branch point of a road.

Preferably, the lane determining unit defines a lane adjacent to the vehicle lane which is determined before it is detected that the lane marking is not imaged at all or is partly not imaged, as candidates for the vehicle lane which is to be determined in the imaging order-based lane determination.

Generally, a section with no lane markings imaged or without part of lane markings imaged in the image information is short in most cases, and therefore, it is less likely that the vehicle changes lanes across the plural lanes in such a short section. Therefore, with the above-described structure, a lane which is unlikely to become the vehicle lane can be excluded from the candidate, which enables enhanced accuracy of the imaging order-based accuracy.

A navigation apparatus according to the present invention is characterized in that it includes: the lane determining device described above; a map database storing map information including the road information; an application program operating by referring to the map information and information on the vehicle lane determined by the lane determining device; and a guidance information output unit operating according to the application program to output guidance information.

According to such a characteristic structure, even when there is no lane marking around the vehicle, guidance such as route search and course guidance can be performed properly in consideration of the information on the vehicle lane determined by the lane determining device.

A lane determining method according to the present invention is characterized in that it includes: an image information obtaining step of obtaining image information including a captured image of at least a lane marking around a vehicle; a vehicle position information obtaining step of obtaining vehicle position information indicating a current position of the vehicle; a road information obtaining step of obtaining road information including information on a position and a form of the lane marking existing around the vehicle, based on the vehicle position information; an image recognizing step of recognizing the image of the lane marking included in the image information; a detecting step of detecting, based on the road information, that a branch point exists on a road in a forward direction of the vehicle and the lane marking is not imaged at all or is partly not imaged in the image information; and an imaging order-based lane determining step of, when it is detected in the detecting step that the branch point exists and the lane marking is not imaged at all or is not partly not imaged in the image information, determining the vehicle lane on which the vehicle is traveling, based on an imaging order of specific lane markings imaged after the detection, forms of the specific lane markings, positions of the specific lane markings in the image information, and the road information.

With this characteristic structure, even when there is a branch point of a road in the forward direction of the vehicle and the lane markings are imaged at all or are not partly not imaged in the image information, it is possible to quickly determine the vehicle lane on which the vehicle is traveling after passing through the branch point, based on the imaging order of the specific lane markings imaged thereafter, the forms of the specific lane markings, the positions of the specific lane markings in the image information, and the road information. Specifically, when the lane markings are not imaged at all or are partly not imaged in the image information, it is not possible to specify the vehicle lane, and therefore, if the vehicle passes through a branch point of a road in this state, it is difficult to determine in which direction the vehicle is traveling from the branch point. However, according to this characteristic structure, the imaging order of the specific lane markings imaged thereafter, the forms of the specific lane markings, and the positions of the specific lane markings in the image information are collated with the road information, which makes it possible to quickly specify the vehicle lane and to determine in which direction the vehicle is traveling from the branch point.

### BRIEF DESCRIPTION OF THE DRAWINGS

FIG. 1 is a block diagram schematically showing the whole configuration of a navigation apparatus including a lane determining device according to a first embodiment of the present invention;
FIG. 2 is an explanatory view showing the structure of map information and road information stored in a map database;
FIG. 3 is a view showing an example of image information of an area behind a vehicle equipped with the navigation apparatus when the vehicle is at a Y point in FIG. 6, according to the first embodiment of the present invention;
FIG. 4 is a view showing an example of image information of an area behind the vehicle when the vehicle is at a Z point in FIG 6, according to the first embodiment of the present invention;
FIG. 5 is a view showing an example of road information including feature information of features near a narrow-angle branch point around the vehicle;
FIG. 6 is a view showing an example of a narrow-angle branch point where lane markings with zebra zones are provided, according to the first embodiment of the present invention;
FIG. 7 is a view showing an example of image information of an area behind the vehicle;
FIG. 8 is a view showing an example of road information including feature information of features around the vehicle;
FIG. 9 is a flowchart showing a lane determining method according to the first embodiment of the present invention;
FIG. 10 is a flowchart showing a lane determining method according to the first embodiment of the present invention; and
FIG. 11 is a view showing an example of a narrow-angle branch point where lane markings with deceleration zones are provided, according to another embodiment of the present invention.

### DETAILED DESCRIPTION OF THE PREFERRED EMBODIMENTS

### (First embodiment)

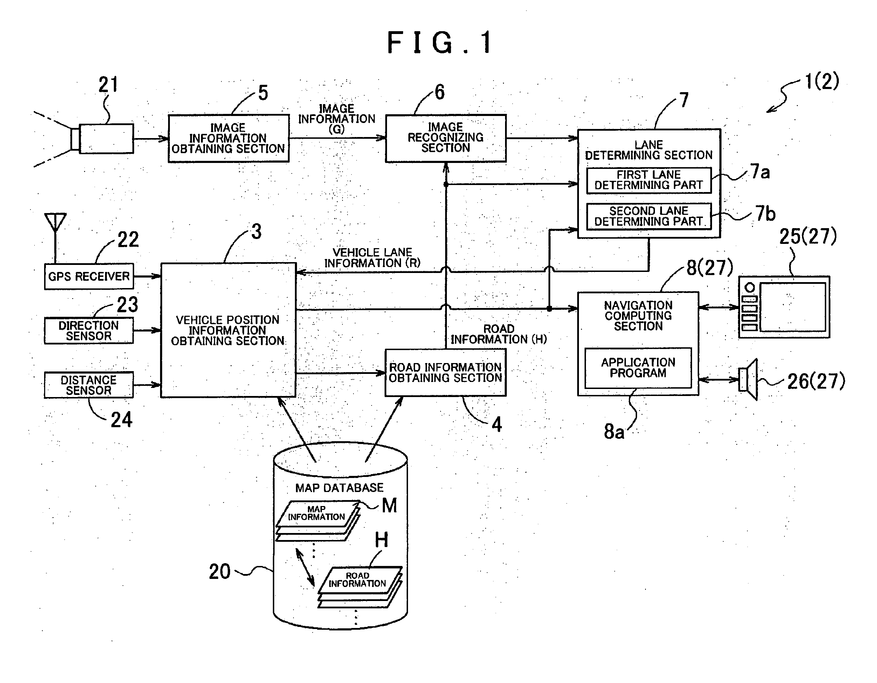

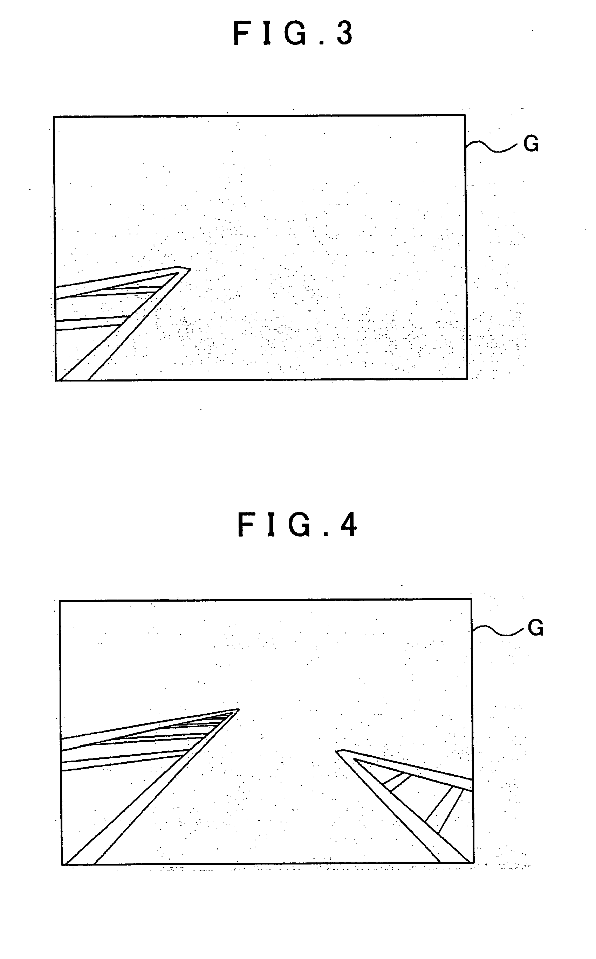

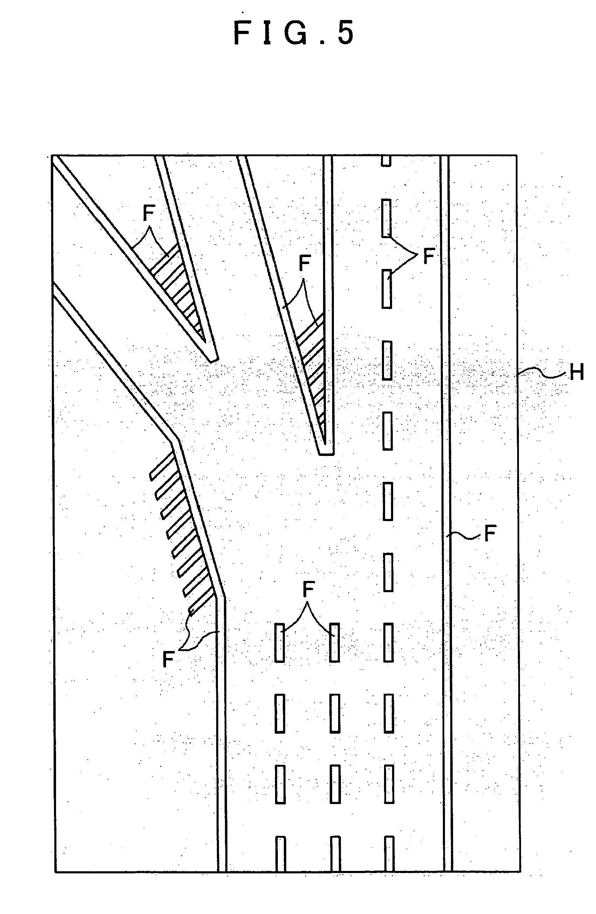

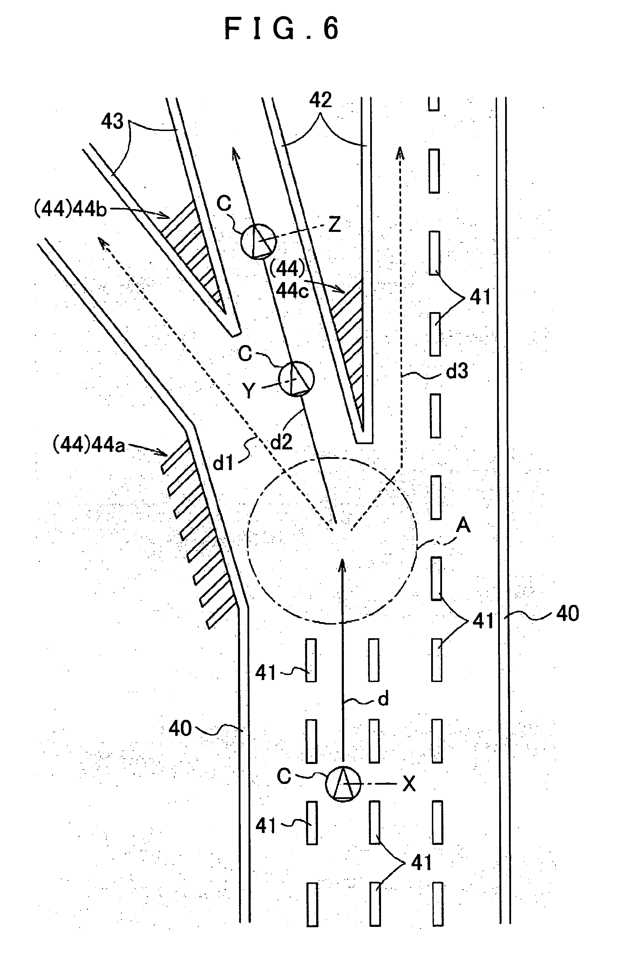

A first embodiment of the present invention will be described based on the drawings. FIG. 1 is a block diagram schematically showing the whole configuration of a navigation apparatus 1 including a lane determining device 2 according to this embodiment. The lane determining device 2 is capable of determining a vehicle lane which is a road lane on which a vehicle C is traveling, based on results of image recognition of lane markings (solid or dashed white lines or the like provided as traffic lane border lines on both sides of the lane) included in obtained image information G (see FIG. 3, FIG. 4, and FIG. 7) and based on road information H obtained from a map database 20. Further, even immediately after the vehicle C passes through a branch point (see FIG. 5, FIG. 6, and so on) where the above lane determination using the image recognition results is difficult, the lane determining device 2 is capable of quickly determining the vehicle lane on which the vehicle C is traveling, by using results of image recognition of specific lane markings. The navigation apparatus 1 performs predetermined navigation operations by referring to map information M obtained from the map database 20 and vehicle lane information R which is determined as a result of the lane determination by the lane determining device 2.

Here, "lane markings" refer to solid or dashed white lines, yellow lines, and the like marked as border lines of the traffic lane on both sides or one side of the lane (traffic lane), and solid lines 40, 42, 43, dashed lines 41, and so on shown in FIG. 6 are examples thereof. The concept of the lane markings includes specific lane markings. "Specific lane markings" refer to specific type of lane markings which are targets of image recognition in imaging order-based lane determination. Lane markings having characteristic shapes such as a lane marking with a zebra zone 44 and a lane marking with a deceleration zone 45 are examples of the "specific lane markings". "Branch point" refers to a point where two roads or more meet so that the vehicle can advance in at least two directions, and includes a narrow-angle branch point, an intersection, and the like. "Narrow-angle branch point" refers to a branch point where conventional independent navigation using a GPS (Global Positioning System), a gyro sensor such as a yaw rate sensor, a G sensor, a vehicle speed sensor, and the like has difficulty in determining in which direction the vehicle is advancing from the branch point. "Lane" means a traffic lane but at a forward position or at a rear position of the branch point, it is a concept also including branching roads connecting to the branch point.

Functional sections of the navigation apparatus 1 shown in FIG. 1, concretely, a vehicle position information obtaining section 3, a road information obtaining section 4, an image information obtaining section 5, an image recognizing section 6, a lane determining section 7, and a navigation computing section 8 are functional portions for applying various kinds of processing to input data, which are mounted as hardware or software (program), or as hardware and software, in a processor such as a CPU as a core member. Further, the map database 20 includes, as hardware configuration, a device having a recording medium capable of recording information and its driving unit, such as, for example, a hard disk drive, a DVD drive including a DVD-ROM, or a CD drive including a CD-ROM. Hereinafter, the structures of the sections of the navigation apparatus 1 according to this embodiment will be described in detail.

### 1. Map database

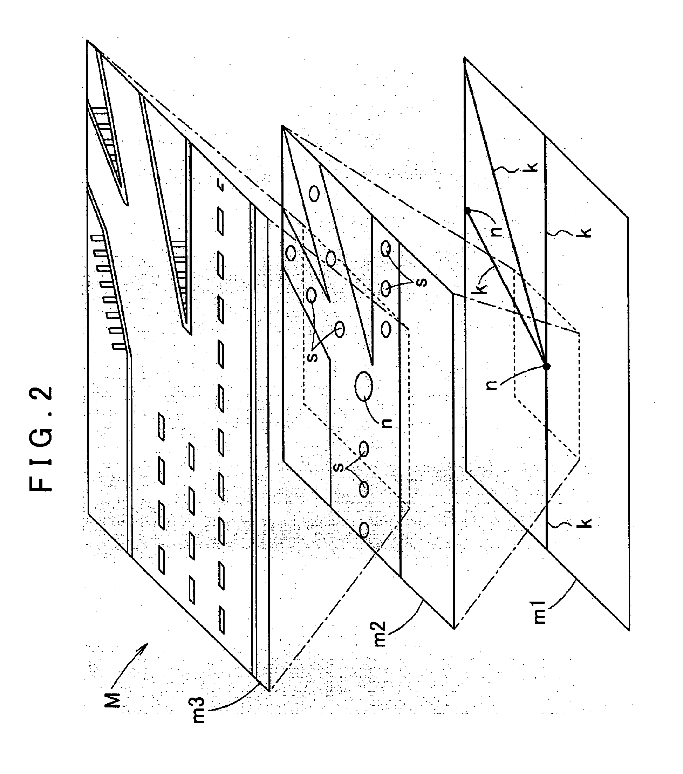

The map database 20 stores a plurality of pieces of the map information M, which are classified on a per predetermined area basis, and pieces of road information H corresponding to these pieces of the map information M respectively. FIG. 2 is an explanatory view showing an example of the structure of the map information M and the road information H which are stored in the map database 20. As shown in FIG. 2, the map database 20 stores a road network layer ml, a road shape layer m2, and a road information layer m3. In this embodiment, pieces of information stored in these layers m1 to m3 respectively form the map information M, and among them, the information stored in the road information layer m3 forms the road information H.

The road network information m1 includes inter-road connection information. Concretely, the road network information m1 includes: information on a large number of nodes n having map position information expressed by longitude and latitude; and information on a large number of links k each linking two nodes n to form a road. Further, each of the links k has, as its link information, information on the road type (type such as an expressway, a toll road, a national road, a prefecture road, or the like), the length and the like of the link. Further, the road shape layer m2 is stored in correspondence to the road network layer m1 and shows the shape of each road. Concretely, the road shape layer m2 includes information on shape interpolation points s which are disposed between the two nodes n (on the link k) and indicate a detailed shape of each of the links k, information on a road width at each of the shape interpolation points s for showing a detailed shape of each road, and so on.

The road information layer m3 is formed in correspondence to the road network layer m1 and the road shape layer m2 and stores detailed information on each road. Examples of the information stored in the road information layer m3 are information on each branch point (a narrow-angle branch point and the like), lane information regarding each road, feature information F regarding various kinds of features (lane markings and the like) provided on each road or around each road, and so on. Here, the lane information includes information on the number of lanes of each road and lane width of each lane. The lane information further includes information on a positional relation of each lane in a plurality of roads branching off and connecting at the branch point and a connection relation of these roads (link angle, substantially straight connection, and so on), and so on.

The feature information F includes position information and form information regarding each feature. Here, the position information has information on the position of a representative point of each feature on a map (longitude and latitude) and the direction of each feature. The form information has information on the shape, size, color, and the like of each feature. In addition to these pieces of information, the feature information F includes type information indicating the type of each feature, and so on. Features shown by the feature information F include road markings (painted markings) provided on a road surface. Examples of the features relating to the road markings include lane markings (various kinds of lane markings such as a solid line, a dashed line, a dual line, a lane marking with a zebra zone, and a lane marking with a deceleration zone) provided along a road to demarcate each lane, traffic direction signs designating a traffic direction of each lane (various arrows such as a straight-ahead arrow, a right-turn arrow, and a left-turn arrow), a pedestrian crossing, a stop line, a speed indication, and the like. Note that the features corresponding to which the feature information F is stored may also include various features such as a traffic signal, a traffic sign, an overpass, a tunnel, and the like, in addition to the above road markings. That is, the road information H includes the feature information F such as the position information, the form information, and so on regarding the lane markings. In this embodiment, among these pieces of the road information H, used is the road information H regarding lane markings as traffic lane border lines marked on both sides or one side of the traffic lane and, in particular, the road information H regarding the specific lane markings. Further, the road information H regarding a branch point, in particular, the road information H regarding a narrow-angle branch point is used.

### 2. Vehicle position information obtaining section

The vehicle position information obtaining section 3 functions as a vehicle position information obtaining unit obtaining vehicle position information S indicating a vehicle position, that is, a current position of the vehicle C. Here, the vehicle position obtaining section 3 is connected to a GPS receiver 22, a direction sensor 23, and a distance sensor 24. The GPS receiver 22 receives GPS signals from a GPS (Global Positioning System) satellite. The GPS signal is normally received every one second and is output to the vehicle position information obtaining section 3. The vehicle position information obtaining section 3 analyses the signals received by the GPS receiver 22 from the GPS satellite, thereby capable of obtaining information regarding a current position (longitude and latitude), a travel direction, a moving speed, and the like of the vehicle C. The direction sensor 23 detects the travel direction of the vehicle C or a change in the travel direction. For example, the direction sensor 23 is formed by a gyro sensor, a geomagnetic sensor, an optical rotation sensor or a rotation-type resistance volume attached to a rotating portion of a steering handle, an angle sensor attached to a wheel portion, or the like. The direction sensor 23 outputs its detection result to the vehicle position information obtaining section 3. The distance sensor 24 detects a speed and a moving distance of the vehicle C. For example, the distance sensor 24 is formed by a vehicle speed pulse sensor outputting a pulse signal every predetermined rotation amount of a drive shaft, a wheel, or the like of the vehicle C, a yaw/G sensor detecting acceleration of the vehicle C, a circuit integrating the detected acceleration, and so on. The distance sensor 24 outputs information on the vehicle speed and the moving distance, which are its detection results, to the vehicle position information obtaining section 3.

The vehicle position information obtaining section 3 performs calculation for locating the vehicle C by using a generally known method based on the outputs from the GPS receiver 22, the direction sensor 23, and the distance sensor 24. Further, the vehicle position information obtaining section 3 obtains, from the map database 20, the map information M regarding the vicinity of the vehicle position, and based on the map information M, performs correction for matching the vehicle position on a road shown in the map information M by generally known map matching. In this manner, the vehicle position information obtaining section 3 obtains the vehicle position information S including the information on the current position of the vehicle C, which is expressed by longitude and latitude, and the information on the travel direction of the vehicle C. The obtained vehicle position information S includes an error ascribable to detection accuracy and the like of each of the sensors 22 to 24. Further, even with the vehicle position information S thus obtained, a vehicle lane which is a lane on which the vehicle C is traveling cannot be specified if a road where the vehicle C is traveling has a plurality of lanes. Therefore, the navigation apparatus 1 according to this embodiment is structured so that the vehicle lane is determined by the later-described lane determining section 7. The vehicle position information S obtained by the vehicle position information obtaining section 3 is output to the road information obtaining section 4, the lane determining section 7, and the navigation computing section 8.

### 3. Road information obtaining section

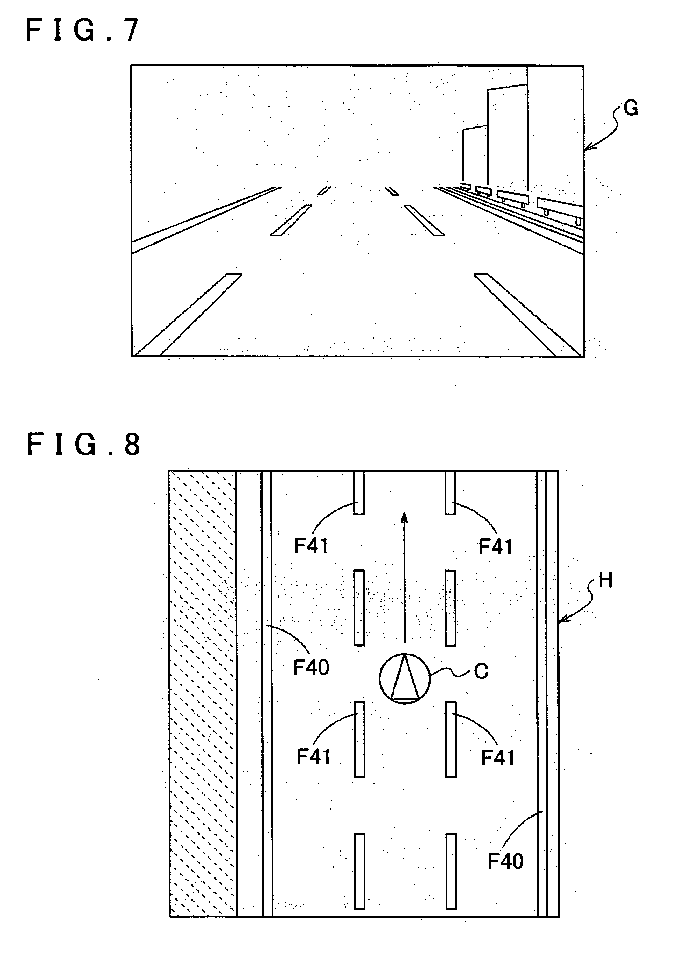

The road information obtaining section 4 obtains necessary parts of the map information M and the feature information H including the feature information F from the map database 20 based on the vehicle position information S and so on obtained by the vehicle position information obtaining section 3. Specifically, the road information obtaining section 4 obtains the road information H including the feature information F regarding features (lane markings and the like) which will be targets of image recognition processing by the image recognizing section 6, to output the obtained information to the image recognizing section 6. Further, the road information obtaining section 4 obtains the road information H regarding the vicinity of the vehicle position for use in the vehicle lane determination by the lane determining section 7, and then outputs the obtained information to the lane determining section 7. Further, the road information obtaining section 4 obtains, from the map database 20, the map information M regarding an area requested by the navigation computing section 8 for use in the navigation processing by the navigation computing section 8, and outputs the obtained information to the navigation computing section 8. Here, the road information H regarding the vicinity of the vehicle position obtained by the road information obtaining section 4 to be output to the lane determining section 7 includes information on lane markings (including specific lane markings) provided on the road where the vehicle C is traveling (see FIG. 5 and FIG. 8), information regarding a branch point (especially, a narrow-angle branch point) present in the forward direction of the vehicle C, information on the number of lanes and widths of the lanes of the road, and so on. Therefore, in this embodiment, the road information obtaining section 4 functions as a road information obtaining unit of the present invention.

### 4. Image information obtaining section

The image information obtaining section 5 functions as an image information obtaining unit obtaining image information G (see FIG. 3, FIG. 4, and FIG. 7) regarding the vicinity of the vehicle position imaged by an imaging device 21. Here, the imaging device 21 is a camera or the like including an image sensor, and is provided at a position where it is capable of capturing images of the lane markings (including the specific lane markings) on the road at least in the vicinity of the vehicle C. As such an imaging device 21, a back camera or the like is suitably used, for instance. FIG. 3 shows the image information G captured by the back camera from a Y point in FIG. 6, and FIG. 4 shows the image information G captured by the back camera from a Z point in FIG. 6. The image information obtaining section 5 receives analog image information captured by the imaging device 21 at predetermined time intervals and converts the analog image information into a digital signal to obtain the image information G. The time interval for receiving the image information G at this time can be set to about 10 ms to about 50 ms, for instance. Consequently, the image information obtaining section 5 is capable of continuously obtaining a plurality of frames of the image information G captured by the imaging device 21. The plural frames of the image information G obtained here are output to the image recognizing section 6.

### 5. Image recognizing section

The image recognizing section 6 functions as an image recognizing unit performing image recognition processing of the image information G (see FIG. 3, FIG. 4, and FIG. 7) obtained by the image information obtaining section 5. In this embodiment, the image recognizing section 6 performs the image recognition processing of the lane markings (including the specific lane markings) as road markings provided on a surface of the road, by using the road information H obtained by the road information obtaining section 4. Concretely, the image recognizing section 6 performs binarization processing, edge detection processing, and so on of the obtained image information G to extract contour information of the features (lane markings) included in the image information G. Thereafter, the image recognizing section 6 extracts lane markings having the contour information matching the forms shown by the form information, based on the form information of the lane markings included in the road information H obtained by the road information obtaining section 4. Then, when extracting the lane markings having the contour information matching the form information, the image recognizing section 6 calculates the positional relations between the vehicle C and the lane markings and outputs information on the imaging order of the lane markings, information on the types of the lane markings, and information on the positional relations with the vehicle C, as image recognition results to the lane determining section 7. The positional relations between the vehicle C and the lane markings in the image information G can be calculated based on the positions of the lane markings in the image information G and based on information indicating a relation between the vehicle position and each of the positions in the image information G, which is calculated in advance based on a mounting position and a mounting angle of the imaging device 21 to the vehicle C, an angle of view of the imaging device 21, and so on.

For example, the image recognizing section 6 performs the image recognition processing of the lane markings (various lane markings such as solid lines 40, dashed lines 41, lane markings with zebra zones, and lane markings with deceleration zones) included in the image information G by using the feature information F included in the road information H obtained by the road information obtaining section 4, specifically, the feature information F regarding the lane markings in the vicinity of the vehicle position. Then, the image recognizing section 6 outputs the image recognition results regarding such lane markings to the lane determining section 7.

### 6. Lane determining section

The lane determining section 7 functions as a lane determining unit determining the vehicle lane which is a road lane where the vehicle C is traveling, based on the image recognition results by the image recognizing section 6, the vehicle position information S obtained by the vehicle position information obtaining section 3, and the road information H obtained by the road information obtaining section 4. In this embodiment, the lane determining section 7 includes a first lane determining part 7a and a second lane determining part 7b. The lane determining section 7 outputs the vehicle lane information R as its determination result to the vehicle position information obtaining section 3. Consequently, the navigation apparatus 1 is capable of obtaining the vehicle lane information R, and through the navigation computing section 8 and so on, it is capable of performing navigation operations such as road guidance and route search by referring to the vehicle lane information R.

Concretely, based on the image recognition results, the vehicle position information S, and the road information H, the lane determining section 7 detects whether or not an area where it is highly likely that the vehicle lane cannot be determined exists in the forward direction of the vehicle C. The area where it is highly likely that the vehicle lane cannot be determined is an area where a branch point (especially, a narrow-angle branch point) exists and the lane markings do not exist at all or do not partly exist before the branch point, and an area A shown in FIG. 6 is an example thereof. In areas other than such an area, the first lane determining part 7a performs first vehicle lane determination by using the lane markings by a conventional method to determine the vehicle lane where the vehicle C is traveling. On the other hand, in an area where a branch point (especially, a narrow-angle branch point) exists and the lane markings do not exist at all or do not partly exist before the branch point, the vehicle lane where the vehicle C is traveling cannot be determined by the first vehicle lane determination. Therefore, the second lane determining part 7b performs second vehicle lane determination by using the specific lane markings after the vehicle C passes through such an area A, to determine the vehicle lane where the vehicle C is traveling. For this purpose, the lane determining section 7 includes the first lane determining part 7a and the second lane determining part 7b. Hereinafter, processing in the first lane determining part 7a and the second lane determining part 7b included in the lane determining section 7 will be described in detail by using FIG. 3 to FIG. 10.

### 6-1. First lane determining part

The first lane determining part 7a performs the first vehicle lane determination when an area in which it is highly likely that the vehicle lane cannot be determined (for example, the area A in FIG. 6) does not exist in the forward direction of the vehicle C. That is, if a branch point does not exist or if all of lane markings are imaged in the vicinity of a branch point if any, the first vehicle lane determination is performed by using the lane markings such as the solid lines 40 or the dashed lines 41 existing on both sides of the lane. In this embodiment, the first lane determining part 7a performs the vehicle lane determination based on the image recognition results of the lane markings (white lines such as the solid lines 40 or the dashed lines 41) by the image recognizing section 6 and the feature information F of the lane markings in the vicinity of the vehicle C, which information is included in the road information H obtained by the road information obtaining section 4. As an example, a description will be given of a case where the first lane determining part 7a performs the vehicle lane determination based on the image information G shown in FIG. 7 and the road information H shown in FIG. 8. Concretely, the first lane determining part 7a specifies the lane on which the vehicle C is traveling, based on the type of the lane markings in the vicinity of the vehicle C and the positional relation between each of the lane markings and the vehicle C, which are included in the image recognition results by the image recognition section 6, and the feature information F on the lane markings included in the road information H regarding the vicinity of the vehicle position. For example, when in the obtained image information G, the dashed lines 41 as the lane markings continuously appear on both sides of the vehicle C as shown in FIG. 7 and in the obtained road information H regarding the vicinity of the vehicle C, a three-lane road is shown and among four lane markings, the outermost two lines are solid lines F40 and the central two lines are dashed lines F41 as shown in FIG. 8, it can be determined that a lane where the vehicle C is traveling is the center lane among the three lanes. That is, in the image shown in such image information G (see FIG. 7), the dashed lines 41 as the lane markings exist on both sides of a widthwise image center which is the position of the vehicle C, and on both outer sides thereof, the solid lines 40 as the lane markings exist respectively. Further, as is seen from the road information H (see FIG. 8), the road where the vehicle C is traveling has three lanes, and pieces of the feature information F of the solid lines F40 as the lane markings exist on the widthwise both sides of the road and pieces of the feature information F of the two dashed lines F41 as the lane markings demarcating the lanes exist on the widthwise center side of the road. Therefore, the first lane determining part 7a can determine that the lane where the vehicle C exists is the center lane among the three lanes, by comparing these pieces of information. The first lane determining part 7a further determines whether or not the vehicle C has changed lanes, according to whether or not the vehicle C has crossed the lane marking, based on the position information regarding the lane markings which is included in the image recognition results by the image recognizing section 6, and based on this determination result, the first lane determining part 7a also performs vehicle lane determination processing.

### 6-2. Second lane determining part

The second lane determining part 7b performs the second vehicle lane determination (imaging order-based lane determination) if an area in which it is highly likely that the vehicle lane cannot be determined exists in the forward direction of the vehicle C. For example, in the forward direction of the vehicle C, there is sometimes an area such as the area A in FIG. 6 in which a branch point (especially, a narrow-angle branch point) exists and the solid lines 40 or the dashed lines 41 as the lane markings do not exist at all or do not partly exist before the branch point. In such an area, the vehicle lane determination cannot be performed. Therefore, in this embodiment, the second lane determining part 7b performs the vehicle lane determination based on the image recognition results by the image recognizing section 6 regarding the specific lane markings (the lane markings with the zebra zones 44, the lane markings with the deceleration zones 45, and the like), and the feature information F regarding the specific lane markings in the vicinity of the vehicle C, which information is included in the road information H obtained by the road information obtaining section 4. Concretely, first, candidates for a vehicle lane on which the vehicle C may travel after passing through the branch point are limited to the vehicle lane itself indicated by vehicle lane information R1 which is obtained before the vehicle lane determination by the first lane determining part 7a becomes impossible, and a lane adjacent to this vehicle lane. Consequently, a lane which is unlikely to become the vehicle lane can be excluded from the candidates, thereby realizing increased accuracy of the imaging order-based lane determination. Then, the second lane determining part 7b performs the lane determination based on the feature information F regarding the specific lane markings (the lane markings with the zebra zones 44, the lane markings with the deceleration zones 45, and the like), which information is included in the road information H regarding these limited vehicle lanes, and the image recognition results of the specific lane markings included in the image information G. Here, the presence/absence of the specific lane markings in the vicinity of the vehicle C, the imaging order of the specific lane markings, the types of the specific lane markings, and the positional relations between the specific lane markings and the vehicle C have been known from the image recognition results. Therefore, based on the image recognition results, the second lane determining part 7b is capable of specifying the vehicle lane that the vehicle C chooses after passing through the branch point, and outputting vehicle lane information R2.

A concrete example of the second vehicle lane determination processing by the second lane determining part 7b will be described in detail based on FIG. 6. FIG. 6 is a view showing an example of a narrow-angle branch point where the lane markings with the zebra zones 44 as the specific lane markings are provided. FIG. 6 shows an example where the vehicle C passes through the Y point from the X point of a four-lane road to advance to a Z point. In a state where the vehicle C is at the X point, the second lane determining part 7b detects, based on the road information H, that the narrow-angle branch point exists in a forward direction d and the lane markings such as the solid lines 40 and the dashed lines 41 do not exist at all or do not partly exist before the narrow-angle branch point (detects the area A). Therefore, the second lane determining part 7b starts the second vehicle lane determination (imaging order-based lane determination). First, by using the vehicle lane information R1 which is obtained by the first vehicle lane determination before the vehicle C reaches the vicinity of the X point, the candidates for a vehicle lane that the vehicle C may choose after passing through the narrow-angle branch point are limited to lanes d1, d2, d3 to which the vehicle C can advance along the lane itself in the d direction and its adjacent lanes. Further, the second lane determining part 7b detects whether or not any lane marking with the zebra zone 44 is recognized in the image recognition results which are obtained based on pieces of the image information G sequentially imaged by the back camera of the vehicle C. Further, if any lane marking with the zebra zone 44 is recognized, the second lane determining part 7b detects on which of the right and left of the vehicle C such a lane marking is recognized. Further, if a plurality of the specific lane markings such as the lane markings with the zebra zones 44 are recognized, the second lane determining part 7b detects in which order the plural lane markings with the zebra zones 44 are recognized. Then, the second lane determining part 7b compares these detection results and the information on the positions and forms of the lane markings with the zebra zones 44 provided in the vicinity of the lanes d1, d2, d3, which information is included in the road information H (see FIG. 5 and FIG. 6).

For example, if, while the vehicle C is advancing in the d direction in FIG. 6, the lane marking with the zebra zone 44 is first detected on the right of the vehicle C (the left side in the image information G in FIG. 3) and subsequently the lane marking with the zebra zone 44 is detected on the left of the vehicle C (on the right in the image information G in FIG. 4), it is thought that a lane marking with a zebra zone 44c and a lane marking with a zebra zone 44b are detected in this order, and thus it can be determined that the vehicle C is traveling on the lane in the d2 direction. Similarly, if the lane marking with the zebra zone 44 is first detected on the left of the vehicle C (on the right in the image information G) and subsequently the lane marking with the zebra zone 44 is detected on the right of the vehicle C (on the left in the image information G), a lane marking with a zebra zone 44a and the lane marking with the zebra zone 44b are detected in this order, and it can be determined that the vehicle C is traveling on the lane in the d1 direction. Further, if, in the image information G, the lane marking with the zebra zone 44 is first detected on the left of the vehicle C (on the right in the image information G) and no lane marking with the zebra zone 44 is thereafter detected, it is thought that only the lane marking with the zebra zone 44c is detected and it can be determined that the vehicle C is traveling on the lane in the d3 direction. Therefore, the vehicle lane can be determined based on the imaging order of the lane markings with the zebra zones 44, the positions of the imaged lane markings with the zebra zones 44 relative to the vehicle C, the forms of the imaged lane markings with the zebra zones 44, and the road information H regarding the lane markings with the zebra zones 44. Therefore, even if the narrow-angle branch point exists in the forward direction d and the vehicle lane determination is difficult due to the absence of the solid lines 40 or the dashed lines 41, quick vehicle lane determination is possible.

### 7. Navigation computing section

The navigation computing section 8 is a processing unit operating according to an application program 8a in order to execute navigation functions such as vehicle position display, route search from a place of departure to a destination, course guidance to the destination, and destination search. For example, the navigation computing section 8 performs processing such as obtaining the map information M regarding the vicinity of the vehicle C which is obtained from the map database 20 by the road information obtaining section 4, and then displaying an image of a map on a display unit 25 and displaying a vehicle position mark on the image of the map in an overlaid manner, based on the vehicle position information S. Further, the navigation computing section 8 performs the course guidance by using one of or both of the display unit 25 and an audio output device 26 based on the departure-to-destination route calculated by a generally known method and the vehicle position information S. Further, at this time, the application program 8a refers to the vehicle lane information R determined by the lane determining section 7 to perform the navigation operations such as the vehicle position display, the route search, and the course guidance. Concretely, for example, the application program 8a performs operations such as displaying the determined vehicle lane on the display unit 25 and stopping the course guidance necessitating impossible lane change according to the determined vehicle lane. Therefore, in this embodiment, the navigation computing section 8, the display unit 25, and the audio output device 26 function as a guidance information output section 27 of the present invention. Note that the navigation computing section 8 is connected not only to these components but also to various known components necessary as the navigation apparatus, such as a remote controller, a user interface such as a touch panel integrally provided with the display unit 25, and so on, which are not shown.

### 8. Lane determining method

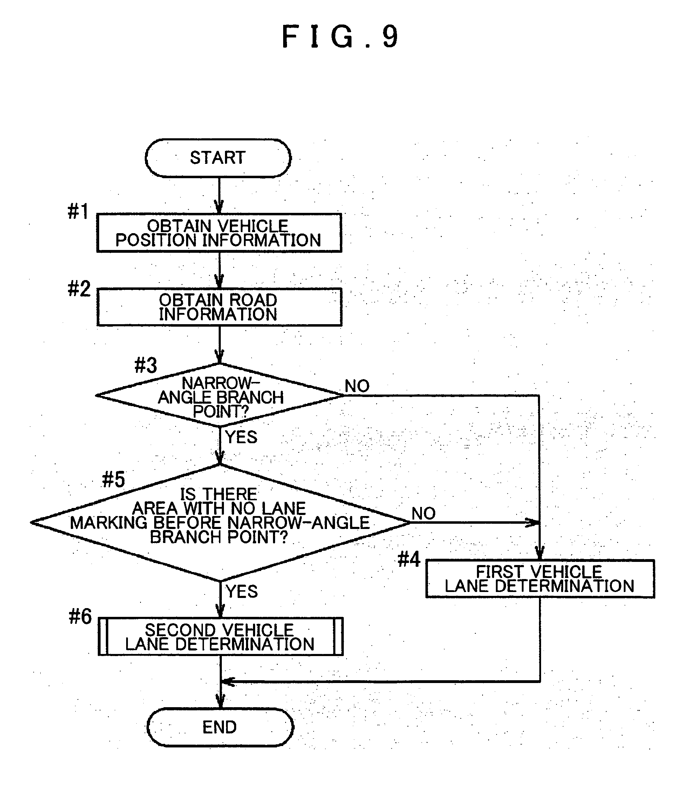

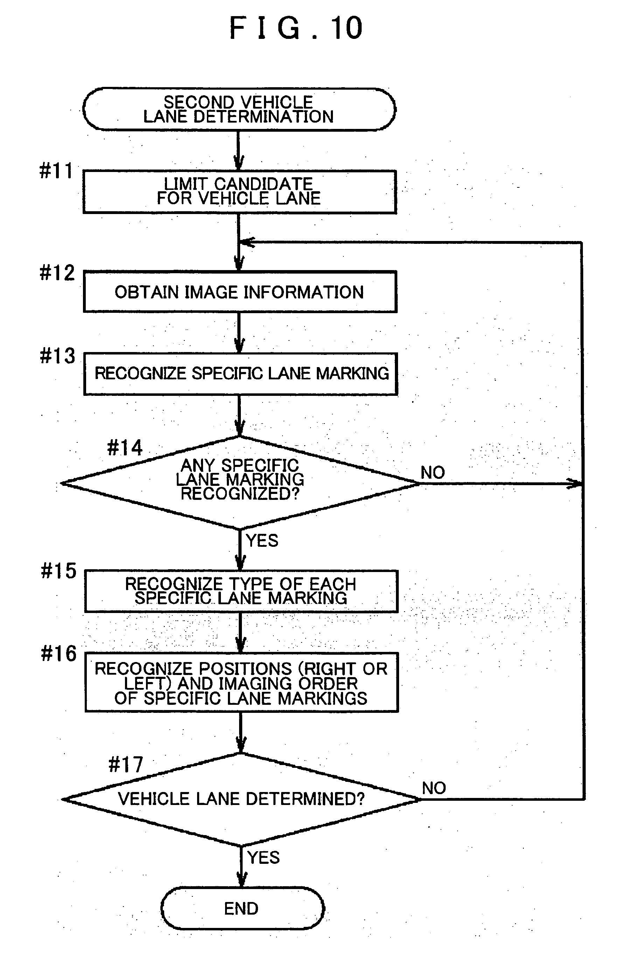

Next, the lane determining method executed in the navigation apparatus 1 including the lane determining device 2 according to this embodiment will be described. FIG. 9 is a flowchart showing the procedure for the whole processing of the lane determining method according to this embodiment, and FIG. 10 is a flowchart showing the procedure for detailed operations of the second lane determination processing according to this embodiment.

As shown in FIG. 9, in the navigation apparatus 1, the vehicle position information obtaining section 3 first obtains the vehicle position information S obtained from the GPS receiver 22 and so on (Step #01). Next, the road information H regarding an area within a predetermined distance in the forward direction d of the vehicle C is obtained from the map database 20 based on the vehicle position information S (Step #02). The obtained road information H includes the information on the position and form of each lane marking. Then, it is detected, based on the road information H, whether or not there is a narrow-angle branch point within the predetermined distance (Step #03). If it is determined, based on the information on the link angle of two links included in the road information H, that there is no narrow-angle branch point (Step #03: NO), the first vehicle lane determination is executed (Step #04). On the other hand, if there is a narrow-angle branch point within the predetermined distance (Step #03: YES), it is detected whether or not there is an area (for example, the area A) with no lane markings (the solid lines 40 and the dashed lines 41) or without part of the lane markings before the narrow-angle branch point (Step #05). If there is no such an area (Step #05: NO), the first vehicle lane determination is executed (Step #04). If it is determined as a result that there is no narrow-angle branch point or there is no such an area, the vehicle lane determination is executed by using the first vehicle lane determination. On the other hand, if there is an area with no lane markings or without part of the lane markings before the narrow-angle branch point (Step #05: YES), the second vehicle lane determination is executed (Step #06).

Next, the second vehicle lane determination will be descried. As shown in FIG. 10, in the second vehicle lane determination, the navigation apparatus 1 first limits the candidates for a vehicle lane that the vehicle C may choose after passing through the narrow-angle branch point, based on the vehicle lane information R1 which is obtained before the vehicle lane determination by the first lane determination part 7a becomes impossible (Step #11). Consequently, a lane that is unlikely to become the vehicle lane can be excluded from the candidates, which can realize increased accuracy of the imaging order-based lane determination. Then, the image information obtaining section 5 obtains the image information G of at least the lane markings imaged in the vicinity of the vehicle C (Step #12). Next, it is recognized whether or not any specific lane marking (the lane marking with the zebra zone 44, the lane marking with the deceleration zone 45, or the like) is imaged in this image information G (Step #13). If no specific lane marking is recognized (Step #14: NO), the processing returns to Step #12, where the image information G is obtained. Therefore, the image information G is continuously obtained until the specific lane marking is recognized. On the other hand, if any specific lane marking is recognized (Step #14: YES), the type of the specific lane marking is recognized (Step #15), and further the position of this specific lane marking is recognized, and if any other specific lane marking is recognized, the imaging order of the first recognized specific marking and the other specific lane marking is recognized (Step #16). Consequently, the form of the specific lane markings in the image information G, the positional relation of the specific lane markings relative to the vehicle C (on which of the right and left of the vehicle C, each of the specific lane markings is detected), and the imaging order of the specific lane markings can be recognized. Then, by comparing these recognition results with the road information H, it is determined whether or not the vehicle lane on which the vehicle C is traveling after passing through the narrow-angle branch point has been determined (Step #17). If the vehicle lane has not been determined (Step #17: NO), the processing goes to Step #12, where the image information G is obtained, and the second vehicle lane determination is continued. On the other hand, if the vehicle lane has been determined (Step #17: YES), the second vehicle lane determination is ended. Here, the processing relating to the lane determination method is ended.

### (Other embodiments)

### Other embodiments of the present invention will be described.

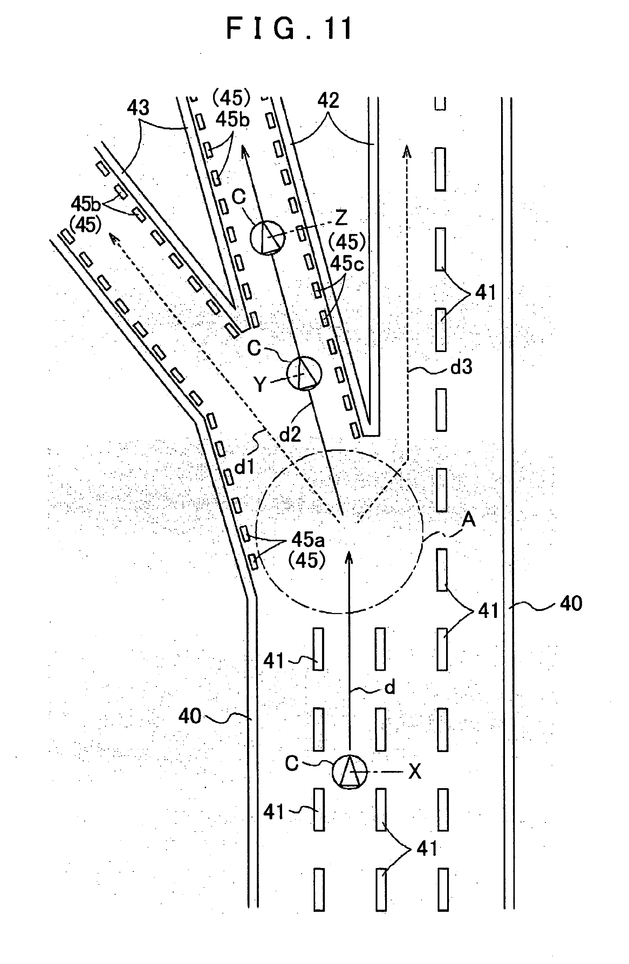

(1) In the above-described first embodiment, the case where the specific lane marking is mainly the lane marking with the zebra zone 44 is described based on FIG. 6. However, a case in which the aforesaid second vehicle lane determination is performed by using, as the specific lane marking, a lane marking with the deceleration zone 45 as shown in FIG. 11 is also one of the preferred embodiments of the present invention. The lane marking with the deceleration zone 45 also has a characteristic shape and thus its image recognition is easy. In this case, the lane marking with the zebra zone 44 in the description using FIG. 3 to FIG. 10 is replaced by the lane marking with the deceleration zone 45. Consequently, even when the vehicle lane determination is difficult because there is a narrow-angle branch point in the forward direction d and the lane markings do not exist at all or do not partly exist, quick vehicle lane determination is possible by using the lane markings with the deceleration zones 45 as is possible by using the lane markings with the zebra zones 44. It should be noted that the specific lane markings are not particularly limited, but may be any other lane markings, provided that they exist ahead of the branch point and have a characteristic shape, and their imaging order, positional relations relative to the vehicle C, and forms can be specified from the image recognition.
(2) The above embodiment describes, as an example, the case where the first lane determining part 7a determines the vehicle lane on the road where the vehicle C is traveling, based on the results of the image recognition of the image information G. However, the vehicle lane determining method by the first lane determining part 7a is not limited to this. For example, besides the vehicle lane determining method according to the above-described embodiment, a structure where the first lane determining part 7a performs the vehicle lane determination based on information from VICS (Vehicle Information and Communication System), concretely, based on information from an optical beacon or the like sent from a transmitter provided on each lane of a road is also one of the preferred embodiments of the present invention.
(3) In the above-described embodiment, the second lane determining part 7b performs the vehicle lane determination after limiting the candidates for the vehicle lane on which the vehicle C may travel after passing through the narrow-angle branch point. However, a structure in which the second lane determining section 7b performs the vehicle lane determination without limiting the candidates for the vehicle lane is also one of the preferred embodiments of the present.

According to the present invention, in determining a lane on which a vehicle is traveling, by using image recognition results of lane markings, it is possible to quickly determine the lane on which the vehicle travels after passing through a branch point of a road even if no lane marking (solid or dashed white lines) as a basis of the recognition of the lane exists before the branch point. Accordingly, it is possible to provide a lane determining device and a lane determining method usable for a navigation apparatus and the like, for instance.
A lane determining device includes: an image information obtaining unit obtaining image information of a lane marking; a vehicle position information obtaining unit obtaining vehicle position information indicating a current position of a vehicle; a road information obtaining unit obtaining road information including position and form information regarding the lane marking around the vehicle; an image recognizing unit recognizing an image of the lane marking in the image information; and a lane determining unit determining a vehicle lane where the vehicle is traveling, based on the image recognition result and the road information, and determining the vehicle lane based on an imaging order, forms, and positions of specific lane markings imaged after it is detected that a branch point exists in a forward direction of the vehicle and the lane marking is not imaged at all or is not partly imaged in the image information, and the road information.

## Claims

1. A lane determining device **(2)** comprising:
an image information obtaining unit **(5)** for obtaining image information **(G)** including a captured image of at least a lane marking around a vehicle **(C);**
a vehicle position information obtaining unit **(3)** for obtaining vehicle position information **(S)** indicating a current position of the vehicle;
a road information obtaining unit **(4)** for obtaining road information **(H)** including information on a position and a form of the lane marking existing around the vehicle, based on the vehicle position information **(S);**
an image recognizing unit **(6)** for recognizing the image of the lane marking included in the image information **(G);** and
a lane determining unit **(7)** for determining a vehicle lane on which the vehicle **(C)** is traveling, based on a result of the image recognition by the image recognizing unit **(6)** and the road information **(H),**
**characterized in that**
when it is detected, based on the road information **(H),** that a branch point exists on a road in a forward direction of the vehicle **(C)** and the lane marking is not imaged at all or is partly not imaged in the image information **(G),** the lane determining unit **(7)** is adapted to perform imaging order-based lane determination to determine the vehicle lane, based on an imaging order of specific lane markings imaged after the detection, forms of the specific lane markings, positions of the specific lane markings in the image information, and the road information.

2. The lane determining device according to claim 1, wherein the branch point is a narrow-angle branch point of the road.

3. The lane determining device according to claim 1 or 2, wherein the lane determining unit **(7)** is adapted to specify each of the positions of the specific lane markings in the image information **(G)** as a right side or a left side of the vehicle **(C).**

4. The lane determining device according to any one of claims 1 to 3, wherein the imaging order-based lane determination is adapted to use, as the specific lane markings, at least one of a lane marking with a zebra zone **(44)** and a lane marking with a deceleration zone **(45).**

5. The lane determining device according to any one of claims 1 to 4, wherein the lane determining unit **(7)** is adapted to define a lane adjacent to the vehicle lane which is determined before it is detected that the lane marking is not imaged at all or is partly not imaged, as a candidate for the vehicle lane which is to be determined in the imaging order-based lane determination.

6. A navigation apparatus **(1)** comprising:
the lane determining device **(2)** according to any one of claims 1 to 5;
a map database **(20)** for storing map information **(M)** including the road information **(H);**
an application program **(8a)** operating by referring to the map information and information on the vehicle lane determined by the lane determining device; and
a guidance information output unit for operating according to the application program to output guidance information.

7. A lane determining method comprising:
an image information obtaining step **(#12)** of obtaining image information **(G)** including a captured image of at least a lane marking around a vehicle **(C);**
a vehicle position information obtaining step **(#01)** of obtaining vehicle position information **(S)** indicating a current position of the vehicle;
a road information obtaining step **(#02)** of obtaining road information **(H)** including information on a position and a form of the lane marking existing around the vehicle, based on the vehicle position information **(S) ;** and
an image recognizing step **(#13; #15; #16)** of recognizing the image of the lane marking included in the image information,
**characterized by**
a detecting step **(#3; #5)** of detecting, based on the road information, that a branch point exists on a road in a forward direction of the vehicle and the lane marking is not imaged at all or is partly not imaged in the image information; and
an imaging order-based lane determining step **(#6)** of, when it is detected in the detecting step **(#3; #5)** that the branch point exists and the lane marking is not imaged at all or is partly not imaged in the image information, determining the vehicle lane on which the vehicle is traveling, based on an imaging order of specific lane markings imaged after the detection, forms of the specific lane markings, positions of the specific lane markings in the image information, and the road information.

## Patentansprüche

1. Fahrspurbestimmungsvorrichtung **(2)**, mit:
einer Bildinformationenbeziehungseinheit **(5)** zum Beziehen von Bildinformationen **(G)** umfassend ein aufgenommenes Bild von mindestens einer Fahrspurmarkierung um ein Fahrzeug **(C);**
einer Fahrzeugpositionsinformationenbeziehungseinheit **(3)** zum Beziehen von Fahrzeugpositionsinformationen **(S)**, die eine gegenwärtige Position des Fahrzeugs angeben;
einer Straßeninformationenbeziehungseinheit **(4)** zum Beziehen von Straßeninformationen **(H)** umfassend Informationen über eine Position und eine Form einer um das Fahrzeug existierenden Fahrspurmarkierung, basierend auf den Fahrzeugpositionsinformationen **(S)**;
einer Bilderkennungseinheit **(6)** zum Erkennen einer in den Bildinformationen **(G)** enthaltenen Fahrspurmarkierung in dem Bild; und
einer Fahrspurbestimmungseinheit **(7)** zum Bestimmen einer Fahrzeug-Fahrspur, entlang derer das Fahrzeug **(C)** fährt, basierend auf einem Ergebnis der Bilderkennung durch die Bilderkennungseinheit **(6)** und den Straßeninformationen **(H),**
**dadurch gekennzeichnet, dass**
wenn basierend auf den Straßeninformationen **(H)** erfasst wird, dass ein Abzweigungspunkt entlang einer Straße in einer Fahrtrichtung des Fahrzeugs **(C)** existiert und die Fahrspurmarkierung nicht vollständig oder teilweise nicht in den Bildinformationen **(G)** abgebildet ist, die Fahrspurbestimmungseinrichtung **(7)** eingerichtet ist, um eine Abbildungsreihenfolge-basierte Fahrspurbestimmung durchzuführen, um die Fahrzeug-Fahrspur zu bestimmen, basierend auf einer Abbildungsreihenfolge von bestimmten nach der Erfassung abgebildeten Fahrspurmarkierungen, Formen der bestimmten Fahrspurmarkierungen, Positionen der bestimmten Fahrspurmarkierungen in den Bildinformationen, und den Straßeninformationen.

2. Fahrspurbestimmungsvorrichtung gemäß Anspruch 1, wobei der Abzweigungspunkt ein spitzwinkliger Abzweigungspunkt der Straße ist.

3. Fahrspurbestimmungsvorrichtung gemäß Anspruch 1 oder 2, wobei die Fahrspurbestimmungseinheit **(7)** eingerichtet ist, um jede der Positionen der bestimmten Fahrspurmarkierungen in den Bildinformationen **(G)** als eine rechte Seite oder eine linke Seite des Fahrzeugs **(C)** zu spezifizieren.

4. Fahrspurbestimmungsvorrichtung gemäß einem der Ansprüche 1 bis 3, wobei die Abbildungsreihenfolge-basierte Fahrspurbestimmung eingerichtet ist, um als die bestimmten Fahrspurmarkierungen eine Fahrspurmarkierung mit einer Zebrastreifenzone **(44)** und/oder eine Fahrspurmarkierung mit einer Verzögerungszone **(45)** zu verwenden.

5. Fahrspurbestimmungsvorrichtung gemäß einem der Ansprüche 1 bis 4, wobei die Fahrspurbestimmungseinheit **(7)** eingerichtet ist, um eine zu der Fahrspur des Fahrzeugs angrenzende Fahrspur, die bestimmt wurde, bevor erfasst wurde, dass die Fahrspurmarkierung vollständig oder teilweise nicht abgebildet ist, als einen Kandidaten für die Fahrspur zu definieren, die in der Abbildungsreihenfolge-basierten Fahrspurbestimmung zu bestimmen ist.

6. Navigationsgerät **(1),** mit:
der Fahrspurbestimmungsvorrichtung **(2)** gemäß einem der Ansprüche 1 bis 5;
einer Kartendatenbank **(20)** zum Speichern von Karteninformationen **(M)** umfassend die Straßeninformationen **(H);**
einem Anwendungsprogramm **(8a)**, das durch Bezugnehmen auf die Karteninformationen und Informationen über die Fahrzeug-Fahrpur, die durch die Fahrspurbestimmungsvorrichtung bestimmt werden, arbeitet; und
einer Wegleitungsinformationenausgabeeinheit zum Arbeiten gemäß dem Anwendungsprogramm, um die Wegleitungsinformationen auszugeben.

7. Fahrspurbestimmungsverfahren, mit:
einem Bildinformationenbeziehungsschritt **(#12)** des Beziehens von Bildinformationen **(G)** umfassend ein aufgenommenes Bild von mindestens einer Fahrspurmarkierung um ein Fahrzeug **(C);**
einem Fahrzeugpositionsinformationenbeziehungsschritt **(#01)** des Beziehens von Fahrzeugpositionsinformationen **(S)**, die eine gegenwärtige Position des Fahrzeugs angeben;
einem Straßeninformationenbeziehungsschritt **(#02)** des Beziehens von Straßeninformationen **(H)** umfassend Informationen über eine Position und eine Form einer um das Fahrzeug existierenden Fahrspurmarkierung, basierend auf den Fahrzeugpositionsinformationen **(S)**; und
einem Bilderkennungsschritt **(#13; #15; #16)** des Erkennens einer in den Bildinformationen enthaltenen Fahrspurmarkierung in dem Bild;
**gekennzeichnet durch**
einen Erfassungsschritt **(#3; #5)** des Erfassens, basierend auf den Straßeninformationen, dass ein Abzweigungspunkt entlang einer Straße in einer Fahrtrichtung des Fahrzeugs existiert und die Fahrspurmarkierung nicht vollständig oder teilweise nicht in den Bildinformationen abgebildet ist; und
einen Abbildungsreihenfolge-basierten Fahrspurbestimmungsschritt **(#6)** des Bestimmens, wenn in dem Erfassungsschritt **(#3; #5)** erfasst wird, dass der Abzweigungspunkt existiert, und die Fahrspurmarkierung nicht vollständig oder teilweise nicht in den Bildinformationen abgebildet ist, der Fahrzeug-Fahrspur, entlang derer das Fahrzeug fährt, basierend auf einer Abbildungsreihenfolge von bestimmten nach der Erfassung abgebildeten Fahrspurmarkierungen, Formen der bestimmten Fahrspurmarkierungen, Positionen der bestimmten Fahrspurmarkierungen in den Bildinformationen, und den Straßeninformationen.

## Revendications

1. Dispositif de détermination de voie (2) comprenant :
une unité d'obtention d'informations d'image (5) destinée à obtenir des informations d'image (G) comprenant une image capturée d'au moins un marquage de voie autour d'un véhicule (C) ;
une unité d'obtention d'informations de position de véhicule (3) destinée à obtenir des informations sur la position de véhicule (S) indiquant une position actuelle du véhicule ;
une unité d'obtention d'informations de route (4) destinée à obtenir des informations sur la route (H) comprenant des informations sur une position et une forme du marquage de voie existant autour du véhicule sur la base des informations sur la position de véhicule (S) ;
une unité de reconnaissance d'image (6) destinée à reconnaître l'image du marquage de voie incluse dans les informations d'image (G) ; et
une unité de détermination de voie (7) destinée à déterminer une voie de véhicule sur laquelle le véhicule (C) voyage, sur la base d'un résultat de la reconnaissance d'image par l'unité de reconnaissance d'image (6) et les informations sur la route (H),
**caractérisé en ce que**
lorsqu'il est détecté, sur la base des informations sur la route (H), qu'un point d'embranchement existe sur une route dans une direction avant du véhicule (C) et que le marquage de voie n'est pas imagé du tout ou n'est en partie pas imagé dans les informations d'image (G), l'unité de détermination de voie (7) est adaptée pour exécuter une détermination de voie sur la base d'un ordre d'imagerie pour déterminer la voie de véhicule, sur la base d'un ordre d'imagerie de marquages de voie spécifiques imagés après la détection, des formes des marquages de voie spécifiques, des positions des marquages de voie spécifiques dans les informations d'image, et des informations de route.

2. Dispositif de détermination de voie selon la revendication 1, dans lequel le point d'embranchement est un point d'embranchement à angle étroit de la route.

3. Dispositif de détermination de voie selon la revendication 1 ou 2, dans lequel l'unité de détermination de voie (7) est adaptée pour spécifier chacune des positions des marquages de voie spécifiques dans les informations d'image (G) comme un côté droit ou un côté gauche du véhicule (C).

4. Dispositif de détermination de voie selon l'une quelconque des revendications 1 à 3, dans lequel la détermination de voie sur la base d'un ordre d'imagerie est adaptée pour utiliser, comme marquages de voie spécifiques, au moins l'un d'un marquage de voie avec une zone zébrée (44) et un marquage de voie avec une zone de décélération (45).

5. Dispositif de détermination de voie selon l'une quelconque des revendications 1 à 4, dans lequel l'unité de détermination de voie (7) est adaptée pour définir une voie adjacente à la voie de véhicule qui est déterminée avant qu'il soit détecté que le marquage de voie ne soit pas imagé du tout ou ne soit en partie pas imagé, comme un candidat pour la voie de véhicule qui doit être déterminée dans la détermination de voie sur la base d'un ordre d'imagerie.

6. Appareil de navigation (1) comprenant :
le dispositif de détermination de voie (2) selon l'une quelconque des revendications 1 à 5 ;
une base de données de carte (20) destinée à stocker des informations de carte (M) comprenant des informations de route (H) ;
un programme d'application (8a) fonctionnant en se rapportant aux informations de carte et aux informations sur la voie de véhicule déterminées par le dispositif de détermination de voie ; et
une unité de sortie d'informations de guidage destinée à fonctionner selon le programme d'application pour émettre en sortie des informations de guidage.

7. Procédé de détermination de voie comprenant :
une étape d'obtention d'informations d'image (#12) destinée à obtenir des informations d'image (G) comprenant une image capturée d'au moins un marquage de voie autour d'un véhicule (C) ;
une étape d'obtention d'informations de position de véhicule (#01) destinée à obtenir des informations sur la position de véhicule (S) indiquant une position actuelle du véhicule ;
une étape d'obtention d'informations de route (#02) destinée à obtenir des informations sur la route (H) comprenant des informations sur une position et une forme du marquage de voie existant autour du véhicule, sur la base des informations sur la position de véhicule (S) ; et
une étape de reconnaissance d'image (#13, #15, #16) destinée à reconnaître l'image du marquage de voie incluse dans les informations d'image ;
**caractérisé par**
une étape de détection (#3, #5) destinée à détecter, sur la base des informations sur la route, qu'un point d'embranchement existe sur une route dans une direction avant du véhicule et que le marquage de voie n'est pas imagé du tout ou n'est en partie pas imagé dans les informations d'image ; et
une étape de détermination de voie sur la base d'un ordre d'imagerie (#6) pour, lorsqu'il est détecté dans l'étape de détection (#3, #5) que le point d'embranchement existe et que le marquage de voie n'est pas imagé du tout ou n'est en partie pas imagé dans les informations d'image, déterminer la voie de véhicule sur laquelle le véhicule circule, sur la base d'un ordre d'imagerie de marquages de voie spécifiques imagés après la détection, des formes des marquages de voie spécifiques, des positions des marquages de voie spécifiques dans les informations d'image, et des informations de route.
